# FASCICULE DE BREVET EUROPEEN

(11) **EP 2 809 962 B1**
(45) Date de publication et mention de la délivrance du brevet: **27.05.2015**
(21) Numéro de dépôt: 14704318.6
(22) Date de dépôt: 10.02.2014
(51) Int. Cl.: F16D 3/32, F16D 3/38

(54) **MÂCHOIRE DE CARDAN, ASSEMBLAGE POUR DOUBLE CARDAN À ROTULE ET PROCÉDÉ D'USINAGE**
KREUZGELENKBACKE, ANORDNUNG FÜR EIN DOPPELTES UNIVERSALKUGELGELENK UND BEARBEITUNGSVERFAHREN DAFÜR
UNIVERSAL JOINT JAW, ASSEMBLY FOR A DOUBLE UNIVERSAL BALL JOINT AND MACHINING METHOD

(30) Priorité: 11.02.2013 FR 1351132
(43) Date de publication de la demande: 10.12.2014
(73) Titulaire: ZF Systemes de Direction Nacam, S.A.S., 41100 Vendome (FR)
(72) Inventeur: FEVRE, Laurent, F-41000 Saint-Sulpice-de-Pommeray (FR); EYMERY, Vincent, F-41310 Lance (FR)
(74) Mandataire: Bugnion Genève
(86) Numéro de dépôt international: PCT/EP2014/052502
(87) Numéro de publication internationale: WO 2014/122299

(56) Documents cités:
- FR-A1- 2 402 803
- GB-A- 894 806
- US-A1- 2008 227 555

## Description

### DOMAINE TECHNIQUE DE L'INVENTION

La présente invention concerne une liaison à deux cardans et une rotule de guidage, et notamment une telle liaison destinée à relier deux arbres d'une colonne de direction de véhicule automobile. Elle concerne plus particulièrement un assemblage entre une mâchoire de cardan et un élément de rotule d'une telle liaison. Ce type de liaison à deux cardans permet de transmettre la rotation entre deux arbres tournants non alignés et, plus spécifiquement dans l'application à une colonne de direction, entre l'arbre portant le volant et l'arbre portant le pignon de crémaillère.

### ETAT DE LA TECHNIQUE ANTERIEURE

De façon connue, le joint de cardan simple présente l'inconvénient de ne pas être homocinétique, au sens où le rapport entre vitesse de sortie et d'entrée est non constant sur un tour et subit une variation cyclique d'amplitude d'autant plus importante que l'angle entre les arbres est important. On peut dans une certaine mesure corriger ce défaut avec un mécanisme de transmission à deux cardans disposés de telle manière que leurs non-linéarités se compensent et soient acceptables. Pour mieux maîtriser encore ce défaut de linéarité, il est également connu de centrer le double cardan en prévoyant une rotule centrale entre les deux mâchoires de cardan. Un dispositif de ce type est décrit par exemple dans le document FR 2 730 774 A1. Le dispositif comporte une mâchoire centrale reliée à deux mâchoires d'extrémité par deux croisillons, chaque mâchoire d'extrémité comportant une embase présentant une cavité de logement d'une extrémité d'arbre, et deux ailes latérales reliées à l'embase, les deux ailes se faisant face et délimitant entre elles un volume de réception d'un croisillon de cardan. Les deux mâchoires d'extrémité sont en outre liées l'une à l'autre par une rotule composée d'un élément de rotule sphérique rapporté sur l'une des mâchoires d'extrémité et d'un élément de rotule complémentaire cylindrique rapporté sur l'autre mâchoire d'extrémité. La liaison entre les mâchoires d'extrémité et la rotule centrale est réalisée par l'intermédiaire de tenons situés à l'extrémité des ailes des mâchoires. Cette liaison permet un écrasement local des tenons et contribue à diminuer des jeux de fonctionnement.

Ce type de liaison entre rotule et mâchoire d'extrémité n'est toutefois pas entièrement satisfaisant dans la mesure où il peut générer un défaut d'excentration important entre la rotule et l'axe de la transmission générant des contraintes dans le système. Le sertissage du support de rotule peut de plus dégrader l'alésage du roulement de croisillon qui se trouve très proche. Enfin la liaison ne comporte pas de redondance, ce qui peut être préjudiciable pour un organe de sécurité.

Dans le document FR 2 402 803 est divulguée une mâchoire de cardan constituée d'une pièce, comportant : deux ailes latérales reliées à une embase, les deux ailes se faisant face et délimitant entre elles un volume de réception d'un croisillon de cardan, les deux ailes étant pourvues chacune d'un logement de palier de guidage du croisillon de cardan, les deux logements définissant un axe de pivotement du croisillon, perpendiculaire à un axe longitudinal de la mâchoire, la mâchoire de cardan comportant en outre un pont de liaison reliant les deux ailes latérales, les deux logements de paliers étant situés, en référence à l'axe longitudinal, entre l'embase et le pont de liaison, le pont de liaison comportant un trou débouchant coaxial avec l'axe longitudinal. Mais la mâchoire de cardan ainsi constituée est difficile à fixer à une extrémité d'arbre avec la précision requise. Suivant un mode de réalisation, les ailes se prolongent chacune par une patte recourbée radialement vers l'extérieur et sur laquelle vient se fixer l'arbre. Suivant un autre mode de réalisation, on prévoit de réaliser la fixation entre arbre et mâchoire de cardan par soudage, rivetage ou par un système de vis et écrou. Ces solutions sont d'une part complexes à mettre en oeuvre à cadence élevée, et d'autre part peu satisfaisantes pour ce qui est de l'alignement résultant entre la mâchoire et l'arbre.

On peut également former la mâchoire d'extrémité et l'élément de rotule associé d'une seule pièce, comme suggéré par exemple dans le document DE 198 18 570. Mais une telle configuration impose l'utilisation d'un outil non traversant pour l'usinage de la cavité de chaque mâchoire devant recevoir une extrémité d'arbre, ce qui exclut par exemple le brochage. La pièce est alors fabriquée à faible cadence, d'où un coût élevé.

Dans le document US 2008/0227555 est divulguée une mâchoire de cardan constituée d'une pièce et comportant : une embase présentant une cavité de logement d'une extrémité d'arbre, la cavité définissant un axe géométrique d'insertion pour une extrémité d'arbre, la cavité présentant une section constante entre deux extrémités axiales ouvertes, une enveloppe géométrique de la cavité étant définie par une génératrice parallèle à l'axe géométrique d'insertion et décrivant la section constante de la cavité de l'embase, et deux ailes latérales reliées à l'embase, les deux ailes se faisant face et délimitant entre elles un volume de réception d'un croisillon de cardan, les deux ailes étant pourvues chacune d'un logement de palier de guidage du croisillon de cardan, les deux logements définissant un axe de pivotement du croisillon, perpendiculaire à l'axe géométrique d'insertion, la mâchoire de cardan constituée d'une pièce comportant en outre un pont de liaison reliant les deux ailes latérales, les deux logements de paliers étant situés, en référence à l'axe d'insertion, entre l'embase et le pont de liaison. Mais dans cette configuration également, la mâchoire d'extrémité et l'élément de rotule associé sont formés d'une seule pièce, ce qui impose l'utilisation d'un outil non traversant pour l'usinage de la cavité devant recevoir une extrémité d'arbre, et exclut par exemple le brochage. La pièce est alors fabriquée à faible cadence, d'où un coût élevé.

### EXPOSE DE L'INVENTION

L'invention vise à remédier aux inconvénients de l'état de la technique et à proposer un assemblage simplifié entre une mâchoire de joint de cardan et un élément de rotule, qui garantisse à faible coût un meilleur alignement de la rotule par rapport aux arbres reliés par le double cardan incorporant cet assemblage.

Pour ce faire est proposé, selon un premier aspect de l'invention, une mâchoire de cardan constituée d'une pièce et comportant :
- une embase présentant une cavité de logement d'une extrémité d'arbre, la cavité définissant un axe géométrique d'insertion pour une extrémité d'arbre, la cavité présentant une section constante entre deux extrémités axiales ouvertes, une enveloppe géométrique de la cavité étant définie par une génératrice parallèle à l'axe géométrique d'insertion et décrivant la section constante de la cavité de l'embase,
- deux ailes latérales reliées à l'embase, les deux ailes se faisant face et délimitant entre elles un volume de réception d'un croisillon de cardan, les deux ailes étant pourvues chacune d'un logement de palier de guidage du croisillon de cardan, les deux logements définissant un axe de pivotement du croisillon, perpendiculaire à l'axe géométrique d'insertion, et
- un pont de liaison reliant les deux ailes latérales, les deux logements de paliers étant situés, en référence à l'axe d'insertion, entre l'embase et le pont de liaison, le pont de liaison comportant un trou débouchant coaxial avec l'axe d'insertion, le trou débouchant ayant une section située en tout point radialement à l'extérieur de, ou en coïncidence avec, l'enveloppe géométrique de la cavité de l'embase.

Le trou débouchant est destiné soit à constituer lui-même un élément de rotule soit à loger un tel élément de rotule. Le pont reliant les deux ailes rigidifie la structure. La conception d'une pièce unique présentant dans un même axe une cavité d'insertion d'une extrémité d'arbre et un trou débouchant pour un élément de rotule garantit par des moyens particulièrement simples une bonne précision d'alignement de l'élément de rotule et de l'extrémité d'arbre. Rigidification et précision concourent à limiter l'usure des pièces au cours de leur vie.

Par ailleurs, en prévoyant pour loger l'extrémité d'arbre une cavité de section constante, ouverte à ses deux extrémités et de section inférieure à celle du trou débouchant situé dans son prolongement, il est possible d'usiner la cavité par une opération de brochage à l'aide d'une broche passant, au cours ou à l'issue de l'opération de brochage, par le trou débouchant. La précision de ce procédé d'usinage contribue également à la précision de l'assemblage. Le procédé permet également de réduire le temps de cycle de fabrication et le prix de revient.

La pièce constituant la mâchoire de cardan peut être universelle, au sens où elle peut s'adapter aussi bien à un élément de rotule mâle qu'à un élément de rotule femelle, grâce à l'interface constituée par le trou débouchant.

Préférentiellement, la section de la cavité de l'embase est non circulaire. On peut ainsi assurer un verrouillage de forme entre la mâchoire de cardan et l'extrémité de l'arbre destinée à être insérée dans la cavité. On peut notamment prévoir que la cavité de l'embase soit cannelée.

On peut envisager pour le trou débouchant diverses formes, par exemple un cône morse. Toutefois, suivant un mode de réalisation préféré, la section du trou débouchant est constante et, de préférence, non circulaire. Suivant un mode de réalisation particulièrement avantageux, la section du trou débouchant est située en tout point en coïncidence avec l'enveloppe géométrique de la cavité de l'embase. On peut alors former la cavité de logement de l'extrémité d'arbre et le trou débouchant au cours d'une même opération de brochage.

Suivant un autre mode de réalisation, le trou débouchant présente une paroi cylindrique intérieure lisse et constitue ainsi lui-même un élément de rotule femelle.

Selon un autre aspect de l'invention, celle-ci a trait à un assemblage pour double cardan à rotule, comportant : une mâchoire de cardan telle que décrite précédemment, constituant une première pièce, et un élément de rotule qui peut être soit un élément de rotule femelle constitué par le trou débouchant de la mâchoire, soit un élément de rotule mâle ou femelle constituant une deuxième pièce assemblée à la mâchoire de cardan et présentant une extrémité de forme complémentaire du trou débouchant et logée dans le trou débouchant.

La liaison entre la mâchoire de cardan et l'élément de rotule est de préférence obtenue sans pièce supplémentaire, et notamment sans vis. De préférence l'extrémité de l'élément de rotule est frettée dans le trou débouchant.

Suivant une autre variante, l'élément de rotule est vissé dans le trou débouchant. Un frein pourra être prévu pour éviter tout risque de dévissage des pièces.

Préférentiellement l'élément de rotule présente un épaulement de positionnement axial en appui sur le pont de la mâchoire de cardan.

Selon un mode de réalisation, le pont de la mâchoire de cardan présente un sertissage de maintien de l'élément de rotule. On prévient ainsi tout risque de desserrage de la liaison, et on établit une redondance dans la liaison.

Suivant un autre aspect de l'invention, celle-ci a trait à un double cardan comportant au moins un assemblage ou une mâchoire tels que décrits précédemment. L'assemblage permet d'assurer un bon centrage de la rotule par rapport à l'axe d'insertion, d'où une réduction des défauts d'excentration du système entrainant ainsi moins de contraintes dans le système.

En particulier, elle a trait à un double cardan comportant deux assemblages tels que décrits précédemment, l'élément de rotule de l'un des deux assemblages étant logé, directement ou indirectement dans l'élément de rotule de l'autre des deux assemblages.

Préférentiellement, les mâchoires de cardan des deux assemblages sont identiques. Il en résulte un avantage considérable en terme d'approvisionnement des pièces avant leur assemblage et de coût de fabrication.

Suivant un autre aspect de l'invention, celle-ci a trait à un double cardan comportant au moins une première mâchoire de cardan telle que décrite précédemment, dont le trou débouchant présente une paroi lisse, et une deuxième mâchoire de cardan comportant un élément de rotule mâle logé, directement ou indirectement dans le trou débouchant de la première mâchoire de cardan, qui constitue un élément de rotule femelle.

Préférentiellement, le double cardan comporte un coussinet coulissant en plastique interposé entre une portion sphérique d'un élément de rotule et une portion cylindrique d'un autre élément de rotule, le coussinet présentant une cavité intérieure de logement de la portion sphérique et une paroi extérieure coulissant dans la portion cylindrique de l'autre élément de rotule. Le coussinet limite les frottements. Il est de préférence équipé de languettes élastiques, ou plus généralement d'éléments élastiquement déformables qui assurent une reprise des jeux fonctionnels.

Suivant un autre aspect de l'invention, celle-ci a trait à un procédé d'usinage d'une mâchoire de cardan telle que décrite précédemment, procédé suivant lequel la cavité de logement d'une extrémité d'arbre est obtenue par brochage à l'aide d'une broche qui, au cours ou à l'issue de l'opération de brochage, traverse le trou débouchant.

Préférentiellement la cavité de logement d'une extrémité d'arbre et le trou débouchant sont obtenus par une même opération de brochage avec la même broche. Ce procédé se révèle particulièrement économique.

### BREVE DESCRIPTION DES FIGURES

D'autres caractéristiques et avantages de l'invention ressortiront à la lecture de la description qui suit, en référence aux figures annexées, qui illustrent :
- la figure 1, un éclaté d'un double cardan selon un premier mode de réalisation de l'invention ;
- la figure 2, une vue partiellement en coupe suivant un premier plan de coupe du double cardan selon le premier mode de réalisation de l'invention, dans une première position angulaire ;
- la figure 3, une vue partiellement en coupe suivant un deuxième plan de coupe perpendiculaire au premier plan de coupe du double cardan selon le premier mode de réalisation de l'invention, dans une deuxième position angulaire ;
- la figure 4, une vue partiellement en coupe d'une mâchoire du double cardan selon le premier mode de réalisation de l'invention ;
- la figure 5, une vue partiellement en coupe d'un élément de rotule mâle du double cardan selon le premier mode de réalisation de l'invention ;
- la figure 6, une vue partiellement en coupe d'un élément de rotule femelle du double cardan selon le premier mode de réalisation de l'invention ;
- la figure 7, une vue de face d'un coussinet interposé entre l'élément de rotule mâle de la figure 5 et l'élément de rotule femelle de la figure 6 ;
- la figure 8 une vue en coupe du coussinet de la figure 7 ;
- la figure 9, une vue de détail en coupe de l'articulation entre l'élément de rotule mâle de la figure 5 et de l'élément de rotule femelle de la figure 6 par l'intermédiaire du coussinet de la figure 7, et de leurs liaisons respectives avec deux mâchoires selon la figure 4 ;
- la figure 10, une vue partiellement en coupe d'un assemblage vissé entre une mâchoire de cardan et un élément de rotule selon un deuxième mode de réalisation de l'invention ;
- la figure 11, une vue partiellement en coupe d'une mâchoire de cardan intégrant un élément de rotule selon un troisième mode de réalisation de l'invention ;
- la figure 12, une perspective isométrique d'une mâchoire selon un quatrième mode de réalisation de l'invention ;
- la figure 13, une perspective isométrique d'un élément de rotule mâle selon le quatrième mode de réalisation de l'invention ;
- la figure 14, une perspective isométrique d'un élément de rotule femelle selon le quatrième mode de réalisation de l'invention ;
- la figure 15, une vue partiellement en coupe d'un double cardan à rotule selon un cinquième mode de réalisation de l'invention.

Pour plus de clarté, les éléments identiques sont repérés par des signes de référence identiques sur l'ensemble des figures.

### DESCRIPTION DETAILLEE D'UN MODE DE REALISATION

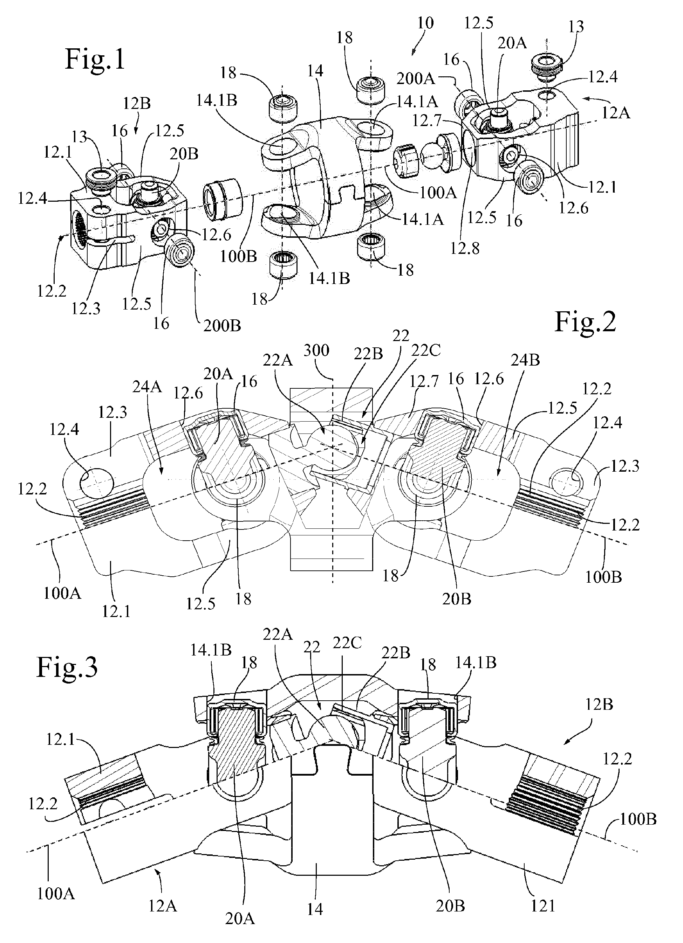

Sur les figures 1 à 3 est illustré dans son ensemble une liaison à double cardan 10 constituée de deux mâchoires de cardan d'extrémité 12A, 12B, reliées entre elles par l'intermédiaire d'une mâchoire centrale intermédiaire double 14, de huit douilles à aiguilles 16, 18, de deux croisillons 20A, 20B et d'une rotule 22.

Les deux mâchoires d'extrémité 12A, 12B, qui dans ce premier mode de réalisation sont identiques, sont destinées à être solidarisées chacune à une extrémité d'un arbre (non représenté) d'une direction de véhicule automobile. Chaque mâchoire 12A, 12B présente à cet effet une embase 12.1 pourvue d'une cavité cannelée 12.2 définissant un axe d'insertion 100A, 100B pour l'extrémité d'arbre associée. La cavité 12.2 est ouverte de part en part, et fendue en 12.3 suivant un plan de serrage. La mâchoire 12A, 12B est également pourvue d'un alésage 12.4 pour permettre l'insertion d'une vis ou d'un boulon de serrage 13 pour refermer la fente 12.3 et pincer l'extrémité d'arbre. La mâchoire 12A, 12B présente en outre deux ailes 12.5 latérales qui s'étendent depuis l'embase 12.1 dans la direction générale de l'axe d'insertion 100A, 100B, latéralement de part et d'autre de la cavité 12.2 de logement d'extrémité d'arbre, de manière à se faire face et à délimiter latéralement entre elles un volume 24A, 24B de logement d'un des croisillons 20A, 20B. Chaque aile 12.5 est pourvue d'un alésage 12.6 de logement de l'une des douilles à aiguilles 16. Les logements 12.6 des deux ailes 12.5 se font face pour recevoir chacun l'une des branches opposées du croisillon 20A, 20B, et définissent un axe 200A, 200B de pivotement du croisillon, perpendiculaire à l'axe d'insertion 100A, 100B. De manière connue en soi, les deux autres branches opposées de chaque croisillon 20A, 20B sont insérées dans les douilles à aiguilles 18 logées dans des alésages cylindriques correspondants 14.1A, 14.1B de la mâchoire double intermédiaire 14.

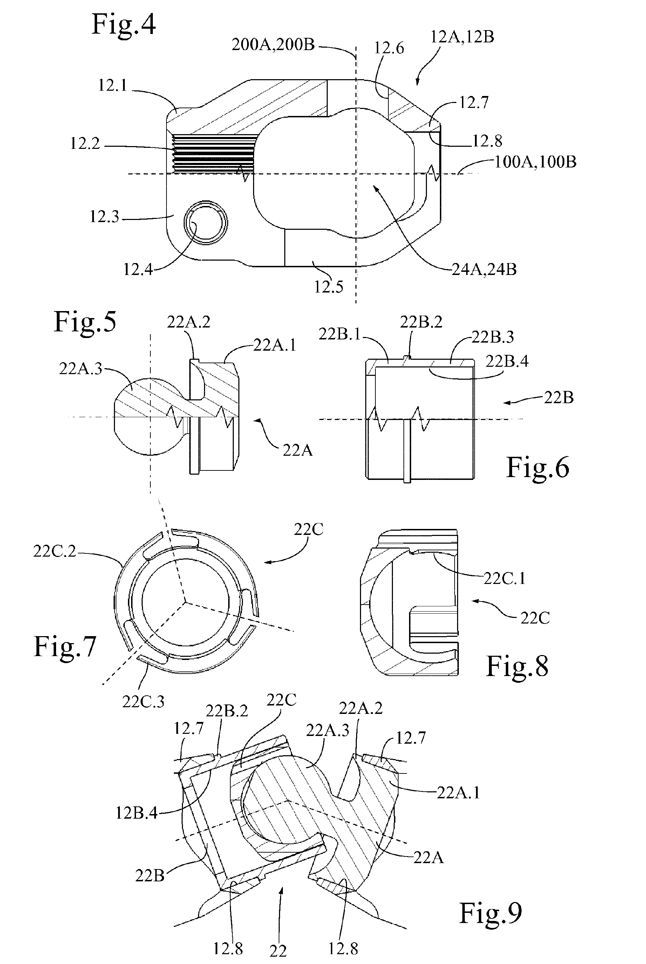

Comme illustré en détail sur la figure 4, les deux ailes 12.5 de la mâchoire sont reliées par un pont de matière 12.7 s'étendant sensiblement parallèlement à l'axe de pivotement 100A, 100B, l'embase 12.1 et le pont 12.7 étant situés, par référence à l'axe d'insertion 100A, 100B, de part et d'autre des ailes 12.5 et du volume 24A, 24B de logement du croisillon 20A, 20B. Le pont 12.7 présente un trou 12.8, de préférence cylindrique, disposé dans l'alignement axial de la cavité 12.2 et ouvert de part en part. Ce trou 12.8 permet de réceptionner un élément de rotule 22A, 22B qui peut être mâle ou femelle. L'élément de rotule mâle 22A, illustré sur la figure 5, présente une première extrémité cylindrique 22A.1 destinée à s'insérer dans le trou 12.8 de la mâchoire associée 12A, un épaulement d'arrêt 22A.2 destiné à venir en appui contre le pont 12.7 au niveau des rebords du trou 12.8, et une deuxième extrémité sphérique 22A.3. L'élément de rotule femelle 22B, illustré sur la figure 6, est constitué d'une douille cylindrique présentant une collerette d'arrêt 22B.2 séparant une partie de fond cylindrique 22B.1 destinée à s'insérer dans le trou 12.8 et une partie saillante 22B.3 restant à l'extérieur du trou, la collerette 22B.2 venant à l'assemblage prendre appui sur le pont 12.7 de la mâchoire d'extrémité 12B au niveau du pourtour du trou 12.8. La douille 22B présente une paroi intérieure cylindrique lisse 22B.4 pour recevoir, directement ou indirectement, l'extrémité sphérique 22A.3 de l'élément de rotule mâle 22.A. Préférentiellement, un coussinet en plastique 22C, visible sur les figures 7 et 8, complète la rotule 22 et assure l'interface entre les éléments de rotule mâle et femelle 22A, 22B. Ce coussinet 22C présente une cavité sphérique 22C.1 pour recevoir et emprisonner l'extrémité sphérique 22A.3 de l'élément de rotule mâle 22A, et une surface extérieure 22C.2 lui permettant de coulisser à l'intérieur de la douille le long de la paroi cylindrique 22B.4. De préférence, cette surface extérieure 22C.2 est pourvue de languettes élastiques 22C.3 angulairement équiréparties sur sa circonférence et qui viennent en appui contre la surface intérieure cylindrique 22B.4 de l'élément de rotule femelle 22B. Le coussinet 22C est de préférence en polyacétal, tel qu'un polyoxyméthylène POM, en polyamide PA ou polyétheréthercétone PEEK, ou autre matériau thermoplastique ayant de bonnes propriétés mécaniques et d'antifriction.

Chaque mâchoire d'extrémité 12A, 12B est formée d'une seule pièce en métal, par exemple en alliage d'aluminium ou en acier. De façon remarquable, le trou 12.8 est d'un diamètre supérieur au diamètre extérieur des cannelures de la cavité 12.2, permettant l'usinage de la cavité 12.2 à l'aide d'une broche qui, au cours ou à l'issue de l'opération de brochage, passe par le trou 12.8.

Chacun des éléments de rotule 22A, 22B est lié à la mâchoire correspondante 12A, 12B de préférence par frettage de la partie cylindrique 22A.1, 22B.1 de l'élément de rotule dans le trou cylindrique 12.8 correspondant, comme illustré sur la figure 9. Un sertissage peut être réalisé pour sécuriser la liaison et empêcher toute extraction de l'élément de rotule 22A, 22B en cas de perte de frettage.

Le dispositif fonctionne de la façon suivante. Lorsqu'un des arbres lié à l'une des mâchoires tourne autour de son axe 100A, 100B, la rotation et le couple sont transmis à l'autre arbre par l'intermédiaire des mâchoires d'extrémité 12A, 12B, des croisillons 20A, 20B et de la mâchoire intermédiaire 14. La rotule 22 ne contribue pas à cette transmission de couple, mais garantit avec une très faible erreur l'égalité des angles formés par chacun des axes 100A, 100B avec un plan géométrique médian 300 lié à la mâchoire intermédiaire 14. Lors du fonctionnement, le coussinet 22C oscille autour de la sphère de l'élément de rotule mâle 22A et coulisse à l'intérieur du cylindre 22B.4 de l'élément de rotule femelle 22B. Les languettes 22C.3 permettent de masquer le jeu de fonctionnement nécessaire entre les deux éléments de rotule 22A, 22B et d'assurer une raideur minimale lors du fonctionnement du double cardan. Elles sont dimensionnées de façon à obtenir une raideur suffisante tout en générant un frottement acceptable lors du fonctionnement du double cardan.

De nombreuses variantes sont possibles.

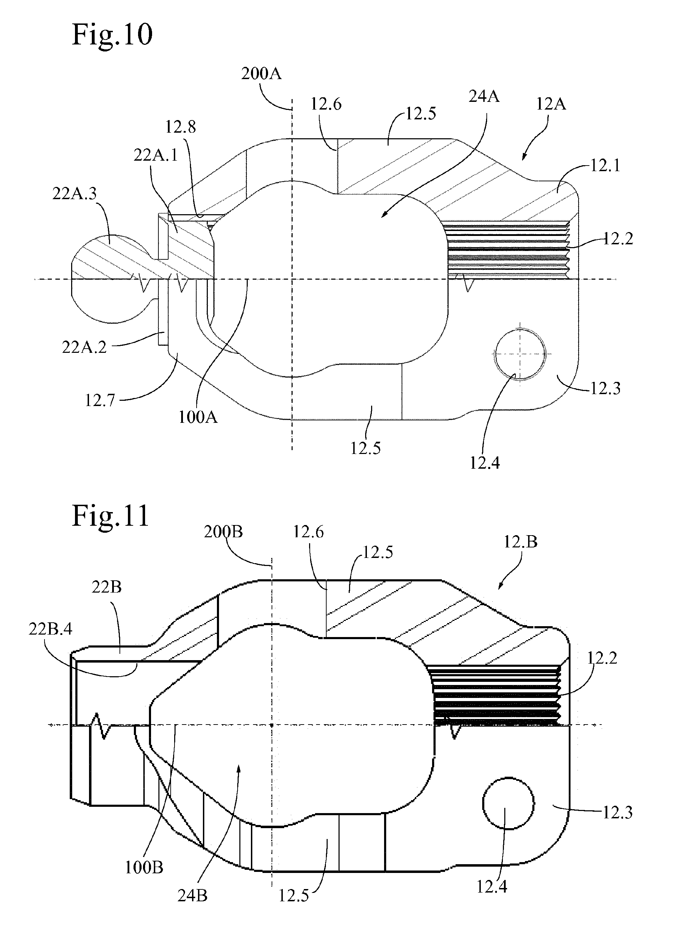

Suivant le mode de réalisation illustré sur la figure 10, on peut prévoir une liaison vissée entre l'un et/ou l'autre des éléments de rotule 22A, 22B (sur la figure, l'élément de rotule mâle 22A) et la mâchoire d'extrémité 12A, 12B associée. L'extrémité 22A.1 (ou 22B1, suivant le cas) de l'élément de rotule 22A, 22B est filetée et le trou 12.8 de la mâchoire d'extrémité correspondante 12A, 12B est taraudé. Le vissage de l'élément de rotule dans la mâchoire se fait jusqu'à ce que l'épaulement 22A.2, 22B.2 de l'élément de rotule vienne en butée sur le pont 12.7 de la mâchoire. Pour éviter le desserrage, une déformation ou un frein filet peuvent être appliqués à la liaison. Pour permettre un usinage de la cavité cannelée 12.2 par brochage, le diamètre intérieur de filet du trou 12.8 est situé radialement à l'extérieur du diamètre de fond de cannelure de la cavité 12.2.

La figure 11 représente une variante de la mâchoire 12B associée à l'élément de rotule femelle. En l'occurrence, l'élément de rotule femelle 22B et la mâchoire d'extrémité 12B sont réalisés d'une seule pièce. La mâchoire 12B intègre la paroi cylindrique intérieure 22B.4 en contact avec le coussinet plastique 22C. Pour permettre un usinage de la cavité 12.2 par brochage, le diamètre du cylindre 22B.4 est de préférence supérieur au plus grand diamètre de fond de cannelure. La mâchoire de cardan liée à la rotule mâle est de préférence identique à celle du premier ou du deuxième mode de réalisation.

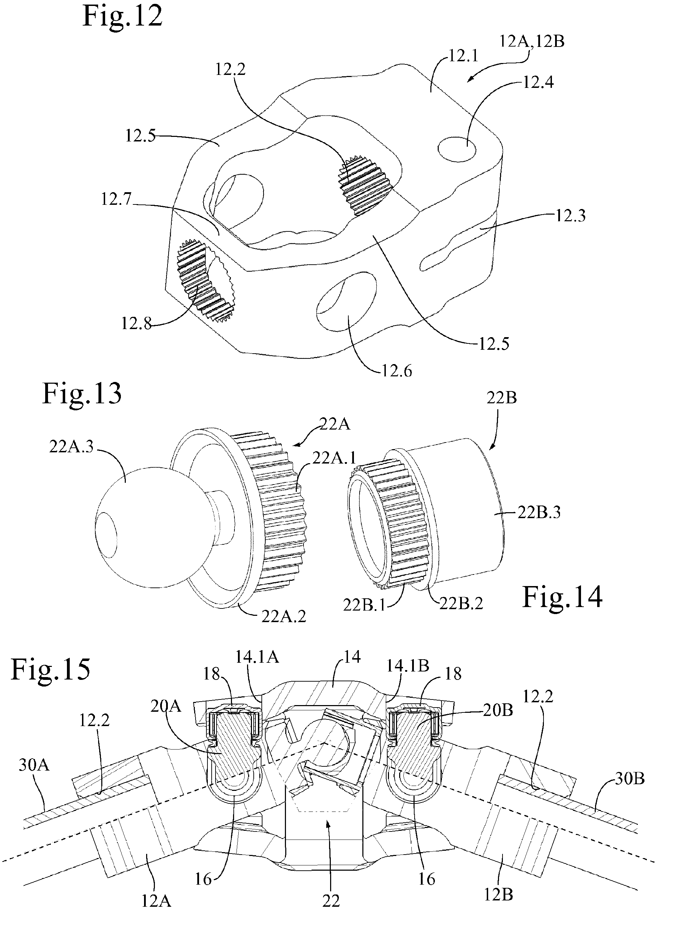

Les figures 12 à 14 illustrent une variante préférée, suivant laquelle la liaison entre l'élément de rotule 22A, 22B et la mâchoire associée 12A, 12B est identique à la liaison entre la mâchoire 12A, 12B et l'extrémité d'arbre. Sur les figures, on a représenté des liaisons cannelées, mais le principe est généralisable à d'autres profils de liaison à section non circulaire. Cette disposition offre l'avantage de permettre un usinage du trou 12.8 et de la cavité 12.2 en une seule opération de brochage, d'où un accroissement de la cadence de fabrication et une précision optimale dans l'alignement de la cavité 12.2 et du trou 12.8. Les éléments de rotule 22A, 22B présente une extrémité 22A.1, 22B.1 de forme conjuguée à celle du trou 12.8 associé.

Suivant la variante de la figure 15, la liaison entre mâchoire 12A, 12B et extrémité d'arbre 30A, 30B peut être frettée, sans être sécurisée par pincement, auquel cas la fente 12.3 et l'alésage 12.4 peuvent être omis. D'autres types de liaison, par exemple par soudage, sont également possibles.

D'autres variantes sont naturellement possibles. En particulier, le coussinet coulissant 22C peut être remplacé par un coussinet fixe cylindrique dans lequel coulisse la sphère 22A.3.

On peut prévoir d'interposer entre l'un des arbres de transmission et la mâchoire de cardan associée un élément antivibratoire fretté dans la cavité 12.2.

## Revendications

1. Mâchoire de cardan (12A, 12B) constituée d'une pièce et comportant :
- une embase (12.1) présentant une cavité (12.2) de logement d'une extrémité d'arbre, la cavité (12.2) définissant un axe géométrique d'insertion (100A, 100B) pour une extrémité d'arbre, la cavité (12.2) présentant une section constante entre deux extrémités axiales ouvertes, une enveloppe géométrique de la cavité étant définie par une génératrice parallèle à l'axe géométrique d'insertion et décrivant la section constante de la cavité (12.2) de l'embase, et
- deux ailes latérales (12.5) reliées à l'embase (12.1), les deux ailes (12.5) se faisant face et délimitant entre elles un volume de réception (24A, 24B) d'un croisillon de cardan (20A, 20B), les deux ailes (12.5) étant pourvues chacune d'un logement (12.6) de palier de guidage du croisillon de cardan (20A, 20B), les deux logements (12.6) définissant un axe de pivotement (200) du croisillon, perpendiculaire à l'axe géométrique d'insertion (100),
- un pont de liaison (12.7) reliant les deux ailes latérales (12.5), les deux logements de paliers (12.6) étant situés, en référence à l'axe d'insertion (100), entre l'embase (12.1) et le pont de liaison (12.7),
**caractérisée en ce que** le pont de liaison (12.7) comporte un trou débouchant (12.8) coaxial avec l'axe d'insertion (100), le trou débouchant (12.8) ayant une section située en tout point radialement à l'extérieur de, ou en coïncidence avec, l'enveloppe géométrique de la cavité de l'embase.

2. Mâchoire de cardan selon la revendication 1, **caractérisée en ce que** la section de la cavité (12.2) de l'embase est non circulaire.

3. Mâchoire de cardan selon la revendication 2, **caractérisée en ce que** la cavité (12.2) de l'embase est cannelée.

4. Mâchoire de cardan selon l'une quelconque des revendications précédentes, **caractérisée en ce que** la section du trou débouchant (12.8) est constante et, de préférence, non circulaire.

5. Mâchoire de cardan selon l'une quelconque des revendications précédentes, **caractérisée en ce que** la section du trou débouchant (12.8) est située en tout point en coïncidence avec l'enveloppe géométrique de la cavité (12.2) de l'embase.

6. Mâchoire de cardan selon l'une quelconque des revendications précédentes, **caractérisée en ce que** le trou débouchant (12.8) présente une paroi cylindrique intérieure lisse.

7. Assemblage pour double cardan à rotule (10), comportant :
- une mâchoire de cardan (12A, 12B) selon l'une quelconque des revendications précédentes,
- un élément de rotule (22A, 22B) constituant une deuxième pièce assemblée à la mâchoire de cardan (12A, 12B), l'élément de rotule (22A, 22B) présentant une extrémité (22A.1, 22B.1) de forme complémentaire du trou débouchant (12.8) et logée dans le trou débouchant (12.8).

8. Assemblage selon la revendication 7, **caractérisé en ce que** l'extrémité (22A.1, 22B.1) de l'élément de rotule est frettée dans le trou débouchant (12.8).

9. Assemblage selon la revendication 7, **caractérisé en ce que** l'élément de rotule est vissé dans le trou débouchant (12.8).

10. Assemblage selon l'une quelconque des revendications 7 à 9, **caractérisé en ce que** l'élément de rotule (22A, 22B) présente un épaulement (22A.2, 22B.2) de positionnement axial en appui sur le pont (12.7) de la mâchoire de cardan.

11. Assemblage selon l'une quelconque des revendications 7 à 10, **caractérisé en ce que** le pont (12.7) de la mâchoire de cardan présente un sertissage de maintien de l'élément de rotule (22A, 22B).

12. Double cardan (10) comportant au moins un assemblage selon l'une quelconque des revendications 7 à 11 ou une mâchoire selon l'une quelconque des revendications 1 à 6.

13. Double cardan (10) comportant deux assemblages selon l'une des revendications 7 à 11, l'élément de rotule (22A) de l'un des deux assemblages étant logé, directement ou indirectement dans l'élément de rotule (22B) de l'autre des deux assemblages.

14. Double cardan (10) selon la revendication 13, **caractérisé en ce que** les mâchoires de cardan (12A, 12B) des deux assemblages sont identiques.

15. Double cardan (10) comportant au moins une première mâchoire de cardan selon la revendication 6 et une deuxième mâchoire de cardan comportant un élément de rotule mâle logé, directement ou indirectement dans le trou débouchant de la première mâchoire de cardan qui constitue un élément de rotule femelle.

16. Double cardan (10) selon l'une quelconque des revendications 12 à 15, **caractérisé en ce qu'**il comporte un coussinet coulissant en plastique (22C) interposé entre une portion sphérique (22A.3) d'un élément de rotule (22A) et une portion cylindrique (22B.4) d'un autre élément de rotule (22B), le coussinet (22C) présentant une cavité intérieure (22C.1) de logement de la portion sphérique (22A.3) et une paroi extérieure (22C.2) coulissant dans la portion cylindrique (22B.4) de l'autre élément de rotule (22B).

17. Procédé d'usinage d'une mâchoire selon l'une quelconque des revendications 1 à 6, **caractérisé en ce que** la cavité (12.2) de logement d'une extrémité d'arbre est obtenue par brochage à l'aide d'une broche qui au cours ou à l'issue de l'opération de brochage traverse le trou débouchant (12.8).

18. Procédé d'usinage d'un assemblage selon la revendication 16, **caractérisé en ce que** la cavité (12.2) de logement d'une extrémité d'arbre et le trou débouchant (12.8) sont obtenus par une même opération de brochage avec la même broche.

## Patentansprüche

1. Kreuzgelenkbacke (12A, 12B), die aus einem Teil besteht und folgendes aufweist:
- eine Basis (12.1), die einen Aufnahmehohlraum (12.2) eines Wellenendes aufweist, wobei der Hohlraum (12.2) eine geometrische Einsetzachse (100A, 100B) für ein Wellenende definiert, wobei der Hohlraum (12.2) zwischen zwei offenen axialen Enden einen konstanten Querschnitt aufweist, wobei eine geometrische Hülle des Hohlraums von einer zu der geometrischen Einsetzachse parallelen Mantellinie definiert ist und den konstanten Querschnitt des Hohlraums (12.2) der Basis beschreibt, und
- zwei mit der Basis (12.1) verbundene seitliche Flügel (12.5), wobei sich die zwei Flügel (12.5) gegenüberstehen und zwischen sich ein Aufnahmevolumen (24A, 24B) eines Kardangelenkkreuzes (20A, 20B) begrenzen, wobei jeder der zwei Flügel (12.5) mit einer Führungslageraufnahme (12.6) des Kardangelenkkreuzes (20A, 20B) ausgestattet ist, wobei die zwei Aufnahmen (12.6) eine zur geometrischen Einsetzachse (100) senkrechte Drehachse (200) des Gelenkkreuzes definieren,
- eine die zwei seitlichen Flügel (12.5) verbindende Verbindungsbrücke (12.7), wobei sich die zwei Lageraufnahmen (12.6) in Bezug auf die Einsetzachse (100) zwischen der Basis (12.1) und der Verbindungsbrücke (12.7) befinden,
**dadurch gekennzeichnet, dass** die Verbindungsbrücke (12.7) ein mit der Einsetzachse (100) koaxial ausmündendes Loch (12.8) aufweist, wobei das ausmündende Loch (12.8) einen Querschnitt hat, der sich an jedem Punkt radial außerhalb der geometrischen Hülle des Hohlraums der Basis befindet oder mit dieser deckungsgleich ist.

2. Kreuzgelenkbacke nach Anspruch 1, **dadurch gekennzeichnet, dass** der Querschnitt des Hohlraums (12.2) der Basis nicht kreisförmig ist.

3. Kreuzgelenkbacke nach Anspruch 2, **dadurch gekennzeichnet, dass** der Hohlraum (12.2) der Basis geriffelt ist.

4. Kreuzgelenkbacke nach einem der vorangehenden Ansprüche, **dadurch gekennzeichnet, dass** der Querschnitt des ausmündenden Lochs (12.8) konstant und vorzugsweise nicht kreisförmig ist.

5. Kreuzgelenkbacke nach einem der vorangehenden Ansprüche, **dadurch gekennzeichnet, dass** der Querschnitt des ausmündenden Lochs (12.8) an jedem Punkt mit der geometrischen Hülle des Hohlraums (12.2) der Basis deckungsgleich ist.

6. Kreuzgelenkbacke nach einem der vorangehenden Ansprüche, **dadurch gekennzeichnet, dass** das ausmündende Loch (12.8) eine glatte zylindrische Innenwand aufweist.

7. Anordnung für doppeltes Universalkugelgelenk (10), die folgendes aufweist:
- eine Kreuzgelenkbacke (12A, 12B) nach einem der vorangehenden Ansprüche,
- ein Kugelgelenkelement (22A, 22B), das ein zweites, mit der Kreuzgelenkbacke (12A, 12B) verbundenes Teil bildet, wobei das Kugelgelenkelement (22A, 22B), das ein Ende (22A.1, 22B.1) mit einer komplementären Form des ausmündenden Lochs (12.8) aufweist, in dem ausmündenden Loch (12.8) aufgenommen ist.

8. Anordnung nach Anspruch 7, **dadurch gekennzeichnet, dass** das Ende (22A.1, 22B.1) des Kugelgelenkelements im ausmündenden Loch (12.8) eingepasst ist.

9. Anordnung nach Anspruch 7, **dadurch gekennzeichnet, dass** das Kugelgelenkelement in das ausmündende Loch (12.8) geschraubt ist.

10. Anordnung nach einem der Ansprüche 7 bis 9, **dadurch gekennzeichnet, dass** das Kugelgelenkelement (22A, 22B) einen axialen Positionierungsabsatz (22A.2, 22B.2) in Abstützung auf der Brücke (12.7) der Kreuzgelenkbacke aufweist.

11. Anordnung nach einem der Ansprüche 7 bis 10, **dadurch gekennzeichnet, dass** die Brücke (12.7) der Kreuzgelenkbacke ein Crimpen zum Halten des Kugelgelenkelements (22A, 22B) aufweist.

12. Doppelkreuzgelenk (10), das mindestens eine Anordnung nach einem der Ansprüche 7 bis 11 oder eine Backe nach einem der Ansprüche 1 bis 6 aufweist.

13. Doppelkreuzgelenk (10), das zwei Anordnungen nach einem der Ansprüche 7 bis 11 aufweist, wobei das Kugelgelenkelement (22A) einer der zwei Anordnungen direkt oder indirekt im Kugelgelenkelement (22B) der anderen der zwei Anordnungen aufgenommen ist.

14. Doppelkreuzgelenk (10) nach Anspruch 13, **dadurch gekennzeichnet, dass** die Kreuzgelenkbacken (12A, 12B) der zwei Anordnungen identisch sind.

15. Doppelkreuzgelenk (10), das mindestens eine erste Kreuzgelenkbacke nach Anspruch 6 und eine zweite Kreuzgelenkbacke aufweist, die ein männliches Kugelgelenkelement aufweist, das direkt oder indirekt in dem ausmündenden Loch der ersten Kreuzgelenkbacke aufgenommen ist, die ein weibliches Kugelgelenkelement bildet.

16. Doppelkreuzgelenk (10) nach einem der Ansprüche 12 bis 15, **dadurch gekennzeichnet, dass** es eine Kunststoffgleitlager (22C) aufweist, das zwischen einem kugeligen Abschnitt (22A.3) eines Kugelgelenkelements (22A) und einem zylindrischen Abschnitt (22B.4) eines anderen Kugelgelenkelements (22B) zwischengestellt ist, wobei das Lager (22C) einen inneren Aufnahmehohlraum (22C.1) des kugeligen Abschnitts (22A.3) und eine Außenwand (22C.2) aufweist, die im zylindrischen Abschnitt (22B.4) des anderen Kugelgelenkelements (22B) gleitet.

17. Bearbeitungsverfahren einer Backe nach einem der Ansprüche 1 bis 6, **dadurch gekennzeichnet, dass** der Aufnahmehohlraum (12.2) eines Wellenendes durch Räumen mit einer Räumnadel hergestellt wird, die während oder am Ende des Räumvorgangs das ausmündende Loch (12.8) durchquert.

18. Bearbeitungsverfahren einer Anordnung nach Anspruch 16, **dadurch gekennzeichnet, dass** der Aufnahmehohlraum (12.2) eines Wellenendes und das ausmündende Loch (12.8) durch denselben Räumvorgang mit derselben Räumnadel hergestellt werden.

## Claims

1. A universal joint jaw (12A, 12B) made in a single piece and comprising:
- a base (12.1) having a cavity (12.2) for housing a shaft end, the cavity (12.2) defining a geometric insertion axis (100A, 100B) for a shaft end, the cavity (12.2) having a constant section between two open axial ends, a geometric envelope of the cavity being defined by a generatrix parallel to the geometric insertion axis and describing the constant section of the cavity (12.2) of the base, and
- two side wings (12.5) connected to the base (12.1), the two wings (12.5) facing one another and delimiting a volume (24A, 24B) between them for receiving a universal joint journal cross (20A, 20B), the two wings (12.5) each being provided with a guide bearing housing (12.6) for the universal joint journal cross (20A, 20B), the two housings (12.6) defining a pivot axis (200) of the journal cross, perpendicular to the geometric insertion axis (100),
- a connecting bridge (12.7) connecting the two side wings (12.5), the two bearing housings (12.6) being situated between the base (12.1) and the connecting bridge (12.7) in reference to the insertion axis (100),
**characterized in that** the connecting bridge (12.7) comprises a through hole (12.8) coaxial with the insertion axis (100), the through hole (12.8) having a section situated in all points radially outside, or coinciding with, the geometric envelope of the cavity of the base.

2. The universal joint jaw according to claim 1, **characterized in that** the section of the cavity (12.2) of the base is noncircular.

3. The universal joint jaw according to claim 2, **characterized in that** the cavity (12.2) of the base is fluted.

4. The universal joint jaw according to any one of the preceding claims, **characterized in that** the section of the through hole (12.8) is constant, and preferably noncircular.

5. The universal joint jaw according to any one of the preceding claims, **characterized in that** the section of the through hole (12.8) is situated in all points coinciding with the geometric envelope of the cavity (12.2) of the base.

6. The universal joint jaw according to any one of the preceding claims, **characterized in that** the through hole (12.8) has a smooth inner cylindrical wall.

7. An assembly for a double universal ball joint (10), comprising:
- a universal joint jaw (12A, 12B) according to any one of the preceding claims,
- a ball joint element (22A, 22B) forming a second part assembled to the universal joint jaw (12A, 12B), the ball joint element (22A, 22B) having an end (22A.1, 22B.1) with a shape complementary to the through hole (12.8) and housed in the through hole (12.8).

8. The assembly according to claim 7, **characterized in that** the end (22A.1, 22B.1) of the universal joint element is braced in the through hole (12.8).

9. The assembly according to claim 7, **characterized in that** the ball joint element is screwed into the through hole (12.8).

10. The assembly according to any one of claims 7 to 9, **characterized in that** the ball joint element (22A, 22B) has an axial positioning shoulder (22A.2, 22B.2) bearing on the bridge (12.7) of the universal joint jaw.

11. The assembly according to any one of claims 7 to 10, **characterized in that** the bridge (12.7) of the universal joint jaw has crimping for maintaining the ball joint element (22A, 22B).

12. A double universal joint (10) comprising at least one assembly according to any one of claims 7 to 11 or a jaw according to any one of claims 1 to 6.

13. A double universal joint (10) comprising two assemblies according to one of claims 7 to 11, the ball joint element (22A) of one of the two assemblies being housed, directly or indirectly, in the ball joint element (22B) of the other of the two assemblies.

14. The double universal joint (10) according to claim 13, **characterized in that** the ball joint jaws (12A, 12B) of the two assemblies are identical.

15. A double universal joint (10) comprising at least one first universal joint jaw according to claim 6 and one second universal joint jaw comprising a male ball joint element housed, directly or indirectly, in the through hole of the first universal joint jaw that constitutes a female ball joint element.

16. The double universal joint (10) according to any one of claims 12 to 15, **characterized in that** it comprises a sliding plastic pad (22C) inserted between a spherical portion (22A.3) of the ball joint element (22A) and a cylindrical portion (22B.4) of another ball joint element (22B), the pad (22C) having a lower cavity (22C.1) for housing the spherical portion (22A.3) and an outer wall (22C.2) sliding in the cylindrical portion (22B.4) of the other ball joint element (22B).

17. A method for machining a jaw according to any one of claims 1 to 6, **characterized in that** the cavity (12.2) housing a shaft end is obtained by pinning using a pin which, during or after the pinning operation, passes through the through hole (12.8).

18. The method for machining an assembly according to claim 16, **characterized in that** the cavity (12.2) housing a shaft end and the through hole (12.8) are obtained by a same pinning operation with the same pin.
